# EUROPEAN PATENT APPLICATION

(11) **EP 4 017 182 A1**
(43) Date of publication of application: **22.06.2022**
(21) Application number: 20876357.3
(22) Date of filing: 12.03.2020
(51) Int. Cl.: H04W 72/04, H04L 1/16

(54) **SIDELINK FEEDBACK METHOD, DEVICE, AND STORAGE MEDIUM**

(30) Priority: 18.10.2019 WO PCT/CN2019/112024
(71) Applicant: GUANGDONG OPPO MOBILE TELECOMMUNICATIONS CORP., LTD., Dongguan, Guangdong 523860 (CN)
(72) Inventor: ZHAO, Zhenshan, Dongguan, Guangdong 523860 (CN); LU, Qianxi, Dongguan, Guangdong 523860 (CN); LIN, Huei-Ming, South Yarra Victoria 3141 (AU)
(74) Representative: Ipside
(86) International application number: PCT/CN2020/079042
(87) International publication number: WO 2021/073032

(57) **Abstract**

The present application discloses a sidelink feedback method, comprising: a first terminal device acquiring first configuration information, wherein the first configuration information is used to determine a sidelink feedback mode, or to determine the maximum number of sidelink feedback channels that can be simultaneously transmitted by the first terminal device. The present application further discloses a first terminal device, an electronic device, and a storage medium.

## Description

### TECHNICAL FIELD

The disclosure relates to the field of wireless communication technologies, and in particular, to a sidelink feedback method, a device, and a storage medium.

### BACKGROUND

During sidelink (SL) transmission, the sidelink feedback channel may be transmitted by the terminal device (user equipment, UE). However, it has not been determined whether two or more than two sidelink feedback channels can be the simultaneously transmitted by the terminal device.

### SUMMARY

The embodiments of the disclosure provide a sidelink feedback method, a device, and a storage medium configured to determine an approach of transmission of a sidelink feedback channel by a terminal device.

According to the first aspect, an embodiment of the disclosure provides a sidelink feedback method, and the method includes the following step. A first terminal device acquires first configuration information. The first configuration information is used to determine a sidelink feedback mode, or the first configuration information is used to determine a maximum number of sidelink feedback channels that can be simultaneously transmitted by the first terminal device.

According to the second aspect, an embodiment of the disclosure provides a sidelink feedback method, and the method includes the following step. An electronic device sends first configuration information to a first terminal device. The first configuration information is used to determine a sidelink feedback mode, or the first configuration information is used to determine a maximum number of sidelink feedback channels that can be simultaneously transmitted by the first terminal device.

According to the third aspect, an embodiment of the disclosure provides a first terminal device, and the first terminal device includes a processing unit.

The processing unit is configured to acquire first configuration information. The first configuration information is used to determine a sidelink feedback mode, or the first configuration information is used to determine a maximum number of sidelink feedback channels that can be simultaneously transmitted by the first terminal device.

According to the fourth aspect, an embodiment of the disclosure provides an electronic device, and the electronic device includes a sending unit.

The sending unit is configured to send first configuration information to a first terminal device. The first configuration information is used to determine a sidelink feedback mode, or the first configuration information is used to determine a maximum number of sidelink feedback channels that can be simultaneously transmitted by the first terminal device.

According to the fifth aspect, an embodiment of the disclosure provides a first terminal device including a processor and a memory configured for storing a computer program that can run on the processor.

The processor is configured to perform the steps of the sidelink feedback method executed by the first terminal device when running the computer program.

According to the sixth aspect, an embodiment of the disclosure provides an electronic device including a processor and a memory configured for storing a computer program that can run on the processor.

The processor is configured to perform the steps of the sidelink feedback method executed by the electronic device when running the computer program.

According to the seventh aspect, an embodiment of the disclosure provides a chip including a processor configured to call and run a computer program from a memory, such that a device installed with the chip executes the sidelink feedback method executed by the first terminal device.

According to the eighth aspect, an embodiment of the disclosure provides a chip including a processor configured to call and run a computer program from a memory, such that a device installed with the chip executes the sidelink feedback method executed by the electronic device.

According to the ninth aspect, an embodiment of the disclosure provides a storage medium storing an executable program, and the executable program implements the sidelink feedback method executed by the first terminal device when being executed by a processor.

According to the tenth aspect, an embodiment of the disclosure provides a storage medium storing an executable program, and the executable program implements the sidelink feedback method executed by the electronic device when being executed by a processor.

According to an eleventh aspect, an embodiment of the disclosure provides a computer program product including a computer program instruction, and the computer program instruction enables a computer to execute the sidelink feedback method executed by the first terminal device.

According to a twelfth aspect, an embodiment of the disclosure provides a computer program product including a computer program instruction, and the computer program instruction enables a computer to execute the sidelink feedback method executed by the electronic device.

According to a thirteenth aspect, an embodiment of the disclosure provides a computer program, and the computer program enables a computer to execute the sidelink feedback method executed by the first terminal device.

According to a fourteenth aspect, an embodiment of the disclosure provides a computer program, and the computer program enables a computer to execute the sidelink feedback method executed by the electronic device.

An embodiment of the disclosure provides a sidelink feedback method, a device, and a storage medium, and the method includes the following step. A first terminal device acquires first configuration information. The first configuration information is used to determine a sidelink feedback mode, or the first configuration information is used to determine a maximum number of sidelink feedback channels that can be simultaneously transmitted by the first terminal device. Therefore, the first terminal device may determine whether the first terminal device itself supports simultaneous transmission of two or more sidelink feedback channels. Alternatively, the first terminal device may determine the maximum number of sidelink feedback channels that can be simultaneously transmitted by the first terminal device itself.

### BRIEF DESCRIPTION OF THE DRAWINGS

FIG. 1 is a schematic diagram of a selection process of transmission resources in a first mode according to the disclosure.
FIG. 2 is a schematic diagram of a selection process of transmission resources in a second mode according to the disclosure.
FIG. 3 is a schematic diagram of service transmission in a unicast transmission mode according to the disclosure.
FIG. 4 is a schematic diagram of service transmission in a multicast transmission mode according to the disclosure.
FIG. 5 is a schematic diagram of service transmission in a broadcast transmission mode according to the disclosure.
FIG. 6 is a schematic diagram of a sidelink feedback process according to the disclosure.
FIG. 7 is a schematic diagram of transmission of feedback information by a first terminal device according to the disclosure.
FIG. 8 is a schematic flow chart of optional processing of a sidelink feedback method according to an embodiment of the disclosure.
FIG. 9 is a schematic diagram of a structure forming the first terminal device according to an embodiment of the disclosure.
FIG. 10 is a schematic diagram of a structure forming an electronic device according to an embodiment of the disclosure.
FIG. 11 is a schematic diagram of a hardware structure forming a device according to an embodiment of the disclosure.

### DESCRIPTION OF THE EMBODIMENTS

To better understand the features and technical content of the embodiments of the disclosure in detail, the implementation of the embodiments of the disclosure will be described in detail below with reference to the accompanying drawings. The accompanying drawings are provided for reference and description only, and are not used to limit the embodiments of the disclosure.

Unlike the conventional cellular system in which communication data is received or sent through a base station, D2D communication is based on SL transmission technology and thereby has higher spectrum efficiency and lower transmission delay. The Internet of Vehicles system uses D2D communication (i.e., direct device-to-device communication). The Third Generation Partnership Project (3GPP) defines two transmission modes: the first mode (also referred to as mode A) and the second mode (also referred to as mode B). The first mode is that the network device allocates transmission resources to the terminal device, and the second mode is that the terminal device independently selects the transmission resources.

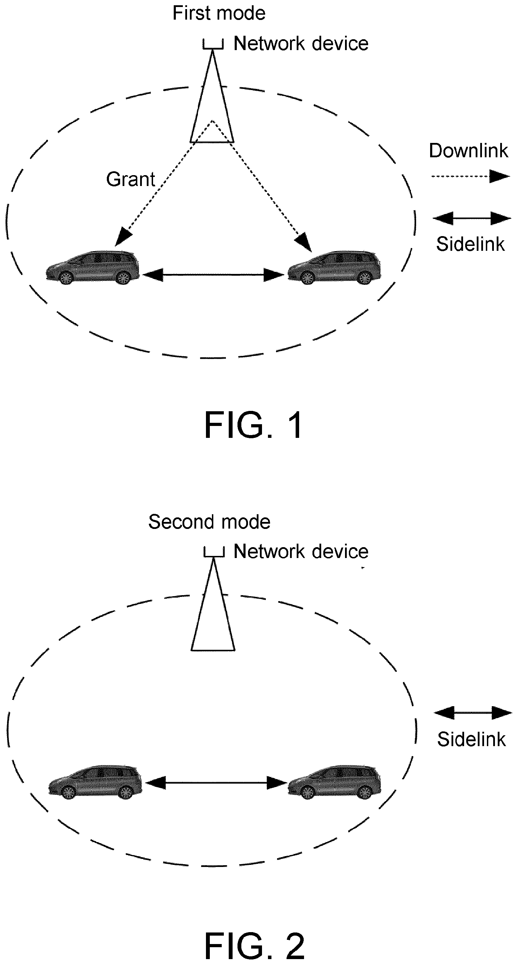

Regarding the first mode, as shown in FIG. 1, the transmission resources of the terminal device are allocated by the base station, and the terminal device transmits data on the sidelink according to the resources allocated by the base station. The base station may allocate a single transmission resource for the terminal device or may allocate a semi-static transmission resource for the terminal device.

Regarding the second mode, as shown in FIG. 2, the terminal device selects a transmission resource in the resource pool for data transmission.

In the new radio-vehicle to everything (NR-V2X), automatic driving needs to be supported. Therefore, higher requirements are put forward for data interaction between vehicles, such as higher throughput, lower delay, higher reliability, larger coverage, and more flexible allocation of resources.

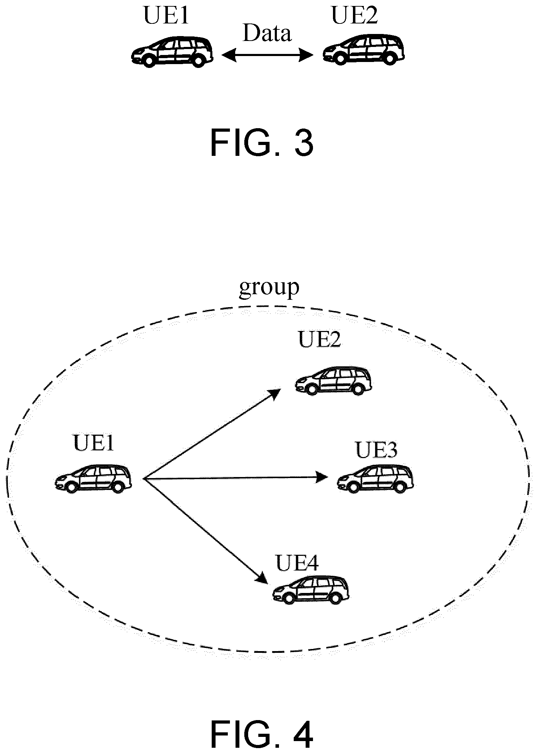

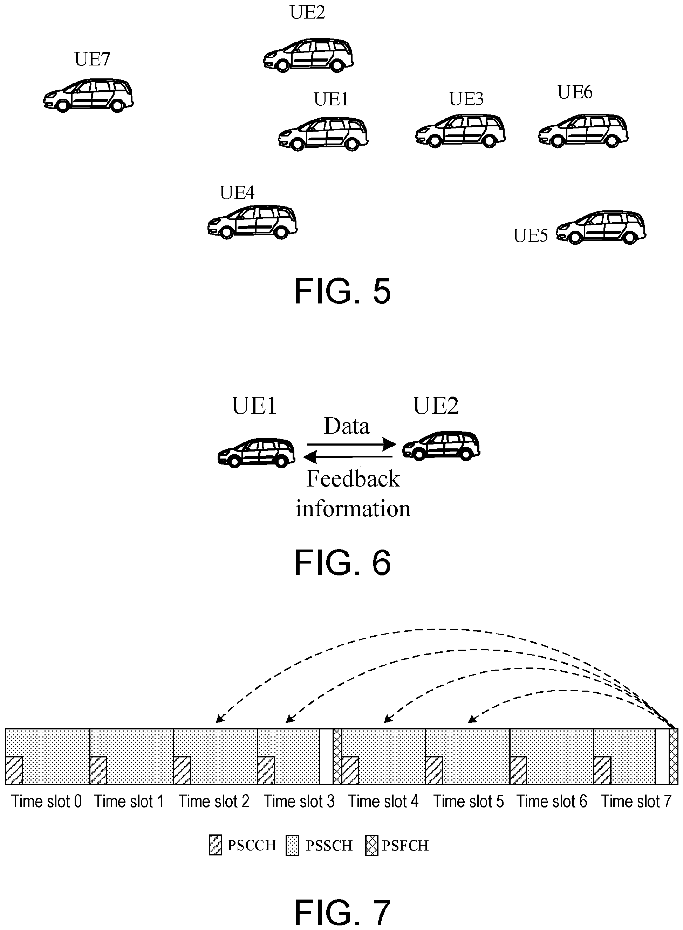

In NR-V2X, the broadcast transmission mode, unicast transmission mode, and multicast transmission mode are supported. Regarding the unicast transmission mode, as shown in FIG. 3, only one terminal device at a receiving end is provided, and unicast transmission is performed between UE1 and UE2. Regarding the multicast transmission mode, the receiving end is all terminal devices in a communication group or all terminal devices within a specific transmission distance. Regarding the multicast transmission mode, as shown in FIG. 4, UE1, UE2, UE3, and UE4 form a communication group. Herein, UE1 is a terminal device at a transmitting end and is configured to send data, and UE2, UE3, and UE4 in the group are all terminal devices at the receiving end and are configured to receive data. Regarding the broadcast transmission mode, the receiving end may be any terminal device. As shown in FIG. 5, UE1 is a terminal device at the transmitting end configured to transmit data, and other terminal devices around UE1, such as UE2, UE3, UE4, UE5, UE6, and UE7 are all terminal devices at the receiving end configured to receive data.

In NR-V2X, in order to improve the reliability of the system, a sidelink feedback channel is introduced. A schematic diagram of a sidelink feedback process is shown in FIG. 6. Regarding the unicast transmission mode, the terminal device at the transmitting end sends sidelink data (including a physical sidelink control channel (PSCCH) and a physical sidelink shared channel (PSSCH)) to the terminal device at the receiving end. The terminal device at the receiving end sends feedback information, such as hybrid automatic repeat reQuest (HARQ) feedback information, to the terminal device at the transmitting end. The terminal device at the transmitting end determines whether data retransmission is required to be performed according to the feedback information of the terminal device at the receiving end. Herein, the HARQ feedback information is carried in a sidelink feedback channel, such as a physical sidelink feedback channel (PSFCH).

In some embodiments, side feedback may be activated or deactivated through pre-configured information or network configuration information. If the sidelink feedback is activated, the terminal device at the receiving end receives the sidelink data sent by the terminal device at the transmitting end and feeds back HARQ acknowledgment (ACK) or negative-acknowledgment (NACK) to the terminal device at the transmitting end according to the detection result. The terminal device at the transmitting end sends retransmitted data or sends new data according to the feedback information of the terminal device at the receiving end. If the sidelink feedback is deactivated, the terminal device at the receiving end does not need to send feedback information, and the terminal device at the transmitting end usually sends data in a blind transmission manner. For instance, the terminal device at the transmitting end repeatedly transmits each sidelink data for K times, instead of determining whether to transmit the retransmitted data according to the feedback information of the terminal device at the receiving end.

In order to reduce the overhead of PSFCH, the PSFCH transmission resources included in one time slot may be used to transmit feedback information for the sidelink data on N time slots, where optionally, N = 1, 2, and 4, and N is pre-configured or configured by a network device. Taking N = 4 as an example, a schematic diagram of transmission of feedback information by a terminal device is shown in FIG. 7. Regarding the PSSCH transmitted in time slot 2, time slot 3, time slot 4, and time slot 5, the corresponding feedback information is all transmitted in time slot 7. Therefore, time slot 2, time slot 3, time slot 4, and time slot 5 may be regarded as a time slot set, and PSFCH corresponding to PSSCH transmitted in the time slot set is transmitted in the same time slot.

In the case of unicast transmission and in the case that sidelink feedback is activated, if UE1 sends PSSCH to UE2 in time slot 2, UE2 needs to send sidelink feedback to UE1 in time slot 7. If UE3 sends PSSCH to UE2 in time slot 3, UE2 needs to send sideline feedback to UE3 in time slot 7. Therefore, the terminal device needs to send two pieces of feedback information in time slot 7, that is, the terminal device needs to send 2 sidelink feedback channels in time slot 7. These 2 feedback channels are used to carry the feedback information transmitted to UE1 and UE3.

When the terminal device needs to send more than one side feedback channel simultaneously, the following two modes may be included:

Mode 1: The terminal device sends two sidelink feedback channels at the same time: the two sidelink feedback channels share transmission power of the terminal device. If the transmission power of the terminal device is limited, the transmission power of each sidelink feedback channel may be lower, thereby reducing the performance of the PSFCH.

Mode 2: The terminal device only sends one sidelink feedback channel: the terminal device may select the sidelink feedback channel corresponding to sidelink data with highest priorities according to a priority of sidelink data corresponding to the sidelink feedback information to ensure transmission performance of the sidelink data with a high priority.

The embodiments of the disclosure provide a sidelink feedback method, and the sidelink feedback method provided by the embodiments of the disclosure may be applied to various communication systems, such as a global system of mobile communication (GSM), a code division multiple access (CDMA) system, a wideband code division multiple access (WCDMA) system, a general packet radio service (GPRS), a long term evolution (LTE) system, a LTE frequency division duplex (FDD) system, a LTE time division duplex (TDD), a universal mobile telecommunication system (UMTS), a worldwide interoperability for microwave access (WiMAX) communication system, or a 5G system and the like.

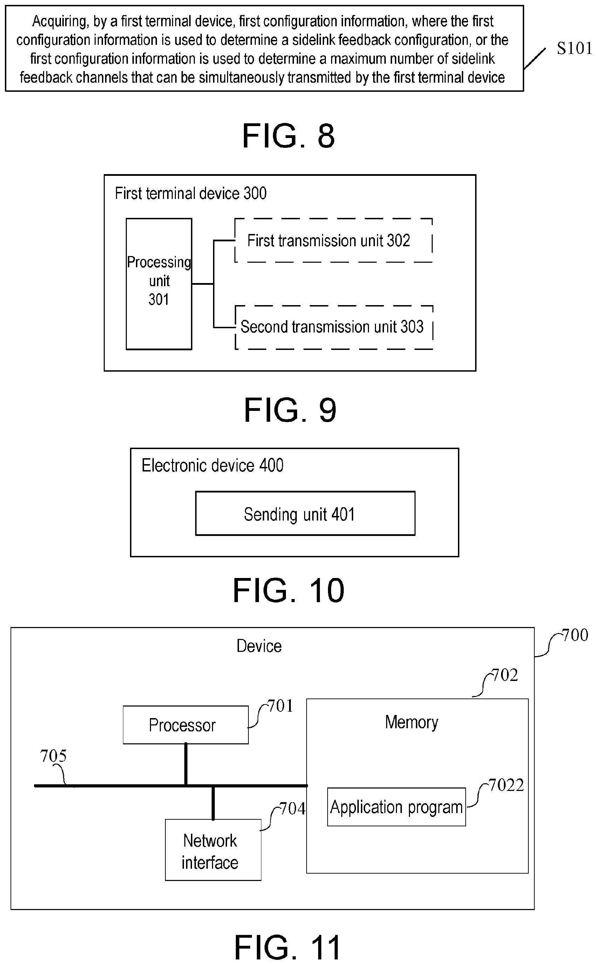

A schematic flow chart of optional processing of a sidelink feedback method according to an embodiment of the disclosure is shown in FIG. 8, and the method includes the following step:

In step S101, a first terminal device acquires first configuration information. The first configuration information is used to determine a sidelink feedback mode, or the first configuration information is used to determine a maximum number of sidelink feedback channels that can be simultaneously transmitted by the first terminal device.

In some embodiments, the first terminal device may acquire the first configuration information according to pre-configured information. In specific implementation, the pre-configured information may be resource pool configuration information, and the first configuration information is carried in the resource pool configuration information. Alternatively, the pre-configured information includes capability information of the first terminal device, and the capability information of the first terminal device may be a capability level or a capability category of the first terminal device. The maximum number of sidelink feedback channels that can be simultaneously transmitted by the first terminal device with a different capability level or capability category may be different. Therefore, according to the capability information of the first terminal device, the maximum number of sidelink feedback channels that can be simultaneously transmitted by the first terminal device corresponding to the capability information may be determined.

In some other embodiments, when the first terminal device is located within a coverage of a cell, the first terminal device may receive the first configuration information sent by a network device corresponding to the cell. In specific implementation, when the network device sends the first configuration information to the first terminal device, the first configuration information may be carried in a broadcast message, radio resource control (RRC) signaling, or downlink control information (DCI). For instance, the network device sends resources for sidelink transmission to the first terminal device through a system information block (SIB), and the first configuration information may be carried in the SIB information. For another instance, for a first terminal device in a connected state (RRC-connected), the network device may configure resource pool information for the first terminal device through RRC signaling, and the resource pool configuration information may include the first configuration information. Alternatively, the network device configures a sidelink transmission resource for the first terminal device through the DCI, and the first configuration information may be carried in the DCI.

In some other embodiments, the first terminal device may receive the first configuration information sent by a second terminal device. In a specific implementation, in a case where the second terminal device transmits the first configuration information to the first terminal device, the first configuration information may be carried in a physical sidelink broadcast channel (PSBCH), a PSCCH, a PSSCH, or sidelink RRC signaling. Herein, the second terminal device may be a group head terminal device of a communication group where the terminal device acquiring the first configuration information is located, and the group head terminal device may be a terminal device that is equipped with functions such as resource management, resource allocation, resource scheduling, or resource controlling in the communication group.

In some embodiments, in a case where the first configuration information includes a first information domain and the first information domain is 1 bit, the first configuration information is used to determine the sidelink feedback mode. In a case where the first information domain is N bits, the first configuration information is used to determine the maximum number of sidelink feedback channels that can be simultaneously transmitted by the first terminal device, and N is a positive integer greater than 1.

Herein, in a case where the first configuration information is used to determine the sidelink feedback mode, the sidelink feedback mode may at least include: the first terminal device transmits only one sidelink feedback channel simultaneously, or the first terminal device transmits two or more than two sidelink feedback channels simultaneously.

Here, the first terminal device transmitting two or more than two sidelink feedback channels simultaneously may also be understood as that the first terminal device can transmit more than one sidelink feedback channel simultaneously, and the maximum number of sidelink feedback channels that can be simultaneously transmitted by the first terminal device is not limited. The first terminal device determines the number of sidelink feedback channels transmitted by the first terminal device according to the detected sidelink data. For instance, as shown in FIG. 7, if the first terminal device detects 5 pieces of sidelink data in time slot 2 including 3 pieces of sidelink data sent by in the broadcast mode (no feedback information needs to be sent) and 2 pieces of sidelink data sent in the unicast mode (feedback information needs to be sent), detects 3 pieces of sidelink data in time slot 3 including 2 pieces of sidelink data sent by in the broadcast mode (no feedback information needs to be sent) and 1 piece of sidelink data sent in the unicast mode (feedback information needs to be sent), detects no sidelink data in time slot 4, and detects 1 piece of sidelink data sent in the unicast mode (feedback information needs to be sent) in time slot 5, then the number of sidelink feedback channels that the first terminal device needs to send in time slot 7 is 4.

In a case where the first configuration information is used to determine the maximum number of sidelink feedback channels that can be simultaneously transmitted by the first terminal device, if the number of sidelink feedback channels to be transmitted by the first terminal device is less than or equal to the maximum number of sidelink feedback channels that can be simultaneously transmitted by the first terminal device, the first terminal device transmits all sidelink feedback channels to be transmitted. If the number of sidelink feedback channels that need to be transmitted by the first terminal device is greater than the maximum number of sidelink feedback channels that can be simultaneously transmitted by the first terminal device, the first terminal device determines, among the sidelink feedback channels that need to be transmitted, M sidelink feedback channels with the highest priorities as the sidelink feedback channels to be transmitted according to a priority of data corresponding to the sidelink feedback channels that need to be transmitted. The determined M sidelink feedback channels are used by the first terminal device for transmission. M is equal to the maximum number of sidelink feedback channels that can be simultaneously transmitted by the first terminal device.

Therefore, if the sidelink feedback channels that need to be transmitted by the first terminal device is a first sidelink feedback channel set, according to the priority of the data corresponding to the sidelink feedback channels that need to be transmitted, the first terminal device selects M sidelink feedback channels with the highest priorities from the first sidelink feedback channel set to form a second sidelink feedback channel set. The second sidelink feedback channel set is a subset of the first sidelink feedback channel set. In the second sidelink feedback channel set, a number of the sidelink feedback channels may be equal to or less than the maximum number of sidelink feedback channels that can be simultaneously transmitted by the first terminal device. For instance, if the number of sidelink feedback channels that need to be transmitted by the first terminal device is 10, and the maximum number of sidelink feedback channels that can be simultaneously transmitted by the first terminal device is 6, the first terminal device selects, among the 10 sidelink feedback channels that need to be transmitted, 6 sidelink feedback channels with the highest priorities as the sidelink feedback channels to be transmitted according to the priority of the data corresponding to the sidelink feedback channels that need to be transmitted.

In some embodiments, the method may further include the following step:

In step S101', the first terminal device transmits the first configuration information to a third terminal device.

Herein, the first configuration information may be the maximum number of sidelink feedback channels that can be simultaneously transmitted by the first terminal device. The first terminal device transmits the first configuration information to the third terminal device, and in this way, the third terminal device may determine, according to the first configuration information, a maximum number of sidelink feedback channels sent to the first terminal device in one PSFCH resource period.

In a specific implementation, the first terminal device may send the first configuration information to the third terminal device through any one of the following: PSCCH, PSSCH, PSBCH, and sidelink RRC signaling.

In some other embodiments, the first terminal device may determine second configuration information according to the first configuration information. The second configuration information is used to determine a maximum number of sidelink feedback channels that can be simultaneously transmitted by the first terminal device to the third terminal device. The first terminal device transmits the second configuration information to the third terminal device.

For instance, the first terminal device and the second terminal device perform unicast communication, and the first terminal device and the third terminal device perform unicast communication. The number of PSFCHs supported by the first terminal device that can be simultaneously transmitted at the same time is 4 (that is, the first configuration information). The first terminal device equally allocates the 4 PSFCHs that can be transmitted at the same time to two unicast links. In this way, the first terminal device and the second terminal device can simultaneously transmit 2 PSFCHs when performing unicast communication, and the first terminal device and the third terminal device can simultaneously transmit 2 PSFCHs when performing unicast communication. Therefore, the first terminal device sends the second configuration information to the third terminal device (or the second terminal device), which is used to indicate that the first terminal device can simultaneously transmit 2 PSFCHs to the third terminal device (or the second terminal device).

In an embodiment, when the first terminal device and the third terminal device establish a unicast link, the first terminal device sends the first configuration information or the second configuration information to the third terminal device through PSCCH, PSSCH, or sidelink RRC signaling.

In some embodiments, in a case where the number of sidelink feedback channels to be transmitted is two or more than two, the method further includes the following step:

In step S102, the first terminal device determines the transmission power of the sidelink feedback channels to be transmitted.

In some embodiments, the first terminal device equally allocates the transmission power for the sidelink feedback channels to be transmitted according to the maximum transmission power of the first terminal device. Optionally, the even allocation of power on the sidelink feedback channels includes one of the following: total power of each sidelink feedback channel is equal, or power spectrum density (PSD) of each sidelink feedback channel is the same. For instance, the maximum transmission power of the first terminal device is P, the number of sidelink feedback channels to be transmitted is M, and in this way, the transmission power of each sidelink feedback channel to be transmitted is P/M. That is, the total power of each sidelink feedback channel is equal. For another instance, the maximum transmission power of the first terminal device is P, the number of sidelink feedback channels to be transmitted is 2, each sidelink feedback channel occupies one PRB, and in this way, the power spectrum density on each PRB is P/2. That is, the power spectrum density of each feedback channel is the same, and the total power of each feedback channel is the same. For another instance, the maximum transmission power of the first terminal device is P, the number of sidelink feedback channels to be transmitted is 2, the first sidelink feedback channel occupies one PRB, the second sidelink feedback channel occupies two PRBs, and in this way, the power spectrum density on each PRB is P/3. That is, the power spectrum density of each feedback channel is the same, but the total power of each feedback channel is different.

In some other embodiments, the first terminal device determines the power of the sidelink feedback channels to be transmitted according to a priority of data corresponding to the sidelink feedback channels to be transmitted. Optionally, in a case where a sum of transmission power of the sidelink feedback channels to be transmitted is greater than the maximum transmission power of the first terminal device, the first terminal device reduces the transmission power of sidelink feedback channels corresponding to data with a low priority. Alternatively, the first terminal device does not allocate the transmission power to the sidelink feedback channels corresponding to the data with a low priority. Herein, not allocating the transmission power to the sidelink feedback channels corresponding to the data with a low priority may be that the transmission power allocated to the sidelink feedback channels corresponding to the data with a low priority is zero. If the power of the sidelink feedback channels corresponding to a lowest priority is reduced to 0 and the sum of transmission power of each of the sidelink feedback channels is still greater than maximum transmission power, the sum of transmission power is enabled to correspond to the power of the sidelink feedback channels of a next-lowest priority, and the rest may be deduced by analogy until the sum of transmission power is less than or equal to the maximum transmission power of the first terminal device.

For instance, if the number of sidelink feedback channels to be transmitted by the first terminal device is 3, a priority of sidelink data corresponding to a first sidelink feedback channel to be transmitted is 2, a priority of sidelink data corresponding to a second sidelink feedback channel to be transmitted is 3, and a priority of sidelink data corresponding to a third sidelink feedback channel to be transmitted is 4. According to a sidelink power control mechanism, the transmission power of the first sidelink feedback channel to be transmitted is PI, transmission power of the second sidelink feedback channel to be transmitted is P2, and transmission power of the third sidelink feedback channel to be transmitted is P3. If the sum of the transmission power of the three sidelink feedback channels to be transmitted is greater than the maximum transmission power of the first terminal device, the first terminal device may first reduce the transmission power of the third sidelink feedback channel corresponding to the priority with 4 until the sum of the transmission power of the three sidelink feedback channels to be transmitted is less than the maximum transmission power of the first terminal device. If the transmission power of the third sidelink feedback channel to be transmitted is P3 = 0 and the sum of the transmission power of the first sidelink feedback channel to be transmitted P1 and the transmission power of the second sidelink feedback channel to be transmitted P2 is still greater than the maximum transmission power of the first terminal device, the transmission power of the second sidelink feedback channel corresponding to the priority with 3 is then further reduced. The rest may be deduced by analogy until the sum of the transmission power of the sidelink feedback channels transmitted by the first terminal device is less than or equal to the maximum transmission power of the first terminal device.

Another schematic flow chart of optional processing of a sidelink feedback method according to an embodiment of the disclosure is provided, and the method includes the following step:

In step S201, an electronic device transmits first configuration information to a first terminal device.

In some embodiments, the electronic device is a network device. When the electronic device is the network device, the first configuration information is at least carried in any one of the following information: a broadcast message, RRC signaling, and DCI.

In some other embodiments, the electronic device is a fourth terminal device. When the electronic device is the fourth terminal device, the first configuration information is at least carried in any one of the following channels: PSBCH, PSCCH, PSSCH, and sidelink RRC signaling. The fourth terminal device may be a group head terminal device of a communication group where the terminal device acquiring the first configuration information is located, and the group head terminal device may be a terminal device that is equipped with functions such as resource management, resource allocation, resource scheduling, or resource controlling in the communication group.

Note that in the embodiments of the disclosure, the description of the first configuration information is identical to the description of the first configuration information provided in the foregoing step S101, so repeated description is not provided herein.

In order to allow the foregoing sidelink feedback method to be implemented, in the embodiments of the disclosure, a first terminal device is further provided. A schematic diagram of a structure forming a first terminal device 300 is shown in FIG. 9, and the first terminal device 300 includes a processing unit 301.

The processing unit 301 is configured to acquire first configuration information. The first configuration information is used to determine a sidelink feedback mode, or the first configuration information is used to determine a maximum number of sidelink feedback channels that can be simultaneously transmitted by the first terminal device.

In some embodiments, the processing unit 301 is configured to acquire the first configuration information according to pre-configured information.

In some embodiments, the pre-configured information includes resource pool configuration information.

In some embodiments, the pre-configured information includes capability information of the first terminal device.

In some embodiments, the processing unit 301 is configured to receive the first configuration information sent by a network device.

In some embodiments, the first configuration information is at least carried in any one of the following information: a broadcast message, RRC signaling, and DCI.

In some embodiments, the processing unit 301 is configured to receive the first configuration information sent by a second terminal device.

In some embodiments, the first configuration information is at least carried in any one of the following channels: PSBCH, PSCCH, PSSCH, and sidelink RRC signaling.

In some embodiments, in a case where the first configuration information includes a first information domain and the first information domain is 1 bit, the first configuration information is used to determine the sidelink feedback mode.

Alternatively, in a case where the first information domain is N bits, the first configuration information is used to determine the maximum number of sidelink feedback channels that can be simultaneously transmitted by the first terminal device, and N is a positive integer greater than 1.

In some embodiments, the sidelink feedback mode further includes the following:

The first terminal device can transmit only one sidelink feedback channel simultaneously.

Alternatively, the first terminal device can transmit two or more than two sidelink feedback channels simultaneously.

In some embodiments, the first terminal device further includes a first transmission unit 302.

The first transmission unit 302 is configured to transmit the first configuration information to a third terminal device.

In some embodiments, the first terminal device 300 further includes a second transmission unit 303.

The second transmission unit 303 is configured to transmit all sidelink feedback channels to be transmitted in a case where the number of sidelink feedback channels to be transmitted is less than or equal to the maximum number of sidelink feedback channels that can be simultaneously transmitted by the first terminal device.

In some embodiments, the processing unit 301 is further configured to determine, among the sidelink feedback channels that need to be transmitted, M sidelink feedback channels with the highest priorities as sidelink feedback channels to be transmitted according to the priority of data corresponding to the sidelink feedback channels that need to be transmitted in a case where the number of sidelink feedback channels that need to be transmitted is greater than the maximum number of sidelink feedback channels that can be simultaneously transmitted by the first terminal device.

M is equal to the maximum number of sidelink feedback channels that can be simultaneously transmitted by the first terminal device.

In some embodiments, the processing unit 301 is further configured to determine the transmission power of the sidelink feedback channels to be transmitted in a case where the number of sidelink feedback channels to be transmitted is two or more than two.

In some embodiments, the processing unit 301 is further configured to equally allocate the transmission power for the sidelink feedback channels to be transmitted according to the maximum transmission power of the first terminal device.

In some embodiments, the processing unit 301 is further configured to determine the power of the sidelink feedback channels to be transmitted according to the priority of the data corresponding to the sidelink feedback channels to be transmitted.

In some embodiments, the processing unit 301 is further configured to reduce the transmission power of sidelink feedback channels corresponding to the data with a low priority in a case where the sum of transmission power of the sidelink feedback channels to be transmitted is greater than the maximum transmission power of the first terminal device.

Alternatively, the processing unit 301 may not allocate the transmission power to the sidelink feedback channels corresponding to the data with a low priority.

In order to allow the foregoing sidelink feedback method to be implemented, in the embodiments of the disclosure, an electronic device is further provided. A schematic diagram of a structure forming an electronic device 400 is shown in FIG. 10, and the electronic device 400 includes a sending unit 401.

The sending unit 401 is configured to send first configuration information to a first terminal device. The first configuration information is used to determine a sidelink feedback mode, or the first configuration information is used to determine a maximum number of sidelink feedback channels that can be simultaneously transmitted by the first terminal device.

In some embodiments, the first configuration information is at least carried in any one of the following information: a broadcast message, RRC signaling, and DCI. In this case, the electronic device is a network device.

In some embodiments, the first configuration information is at least carried in any one of the following channels: PSBCH, PSCCH, PSSCH, and sidelink RRC signaling. In this case, the electronic device is a fourth terminal device.

In some embodiments, in a case where the first configuration information includes a first information domain and the first information domain is 1 bit, the first configuration information is used to determine the sidelink feedback mode. Alternatively, in a case where the first information domain is N bits, the first configuration information is used to determine the maximum number of sidelink feedback channels that can be simultaneously transmitted by the first terminal device, and N is a positive integer greater than 1.

In some embodiments, the sidelink feedback mode includes that: the first terminal device can transmit only one sidelink feedback channel simultaneously, or the first terminal device can transmit two or more than two sidelink feedback channels simultaneously.

The embodiments of the disclosure further provide a first terminal device including a processor and a memory configured for storing a computer program that can run on the processor. The processor is configured to perform the steps of the sidelink feedback method executed by the first terminal device when running the computer program.

The embodiments of the disclosure further provide an electronic device including a processor and a memory configured for storing a computer program that can run on the processor. The processor is configured to perform the steps of the sidelink feedback method executed by the electronic device when running the computer program.

FIG. 11 is a schematic diagram of a hardware structure forming a device (first terminal device or electronic device) according to an embodiment of the disclosure. A device 700 includes at least one processor 701, a memory 702, and at least one network interface 704. The various components in the device 700 are coupled together through a bus system 705. It may be understood that the bus system 705 is used to implement connection and communication among these components. Besides a data bus, the bus system 705 also includes a power bus, a control bus, and a status signal bus. However, for the sake of clear description, the various buses are marked as the bus system 705 in FIG. 11.

It may be understood that the memory 702 may be a volatile memory or a non-volatile memory and may also include both the volatile memory and non-volatile memory. The non-volatile memory may be a ROM, a programmable read-only memory (PROM), an erasable programmable read-only memory (EPROM), an electrically erasable programmable read-only memory (EEPROM), a ferromagnetic random access memory (FRAM), a flash memory, a magnetic surface memory, a compact disk, or a compact disc read-only memory (CD-ROM). The magnetic surface memory may be a magnetic disk storage or a magnetic tape storage. The volatile memory may be a random access memory (RAM) used as an external cache. By way of exemplary but not restrictive description, many forms of RAM are available, such as static random access memory (SRAM), synchronous static random access memory (SSRAM), dynamic random access memory (DRAM), synchronous dynamic random access memory (SDRAM), double data rate synchronous dynamic random access memory (DDRSDRAM), enhanced synchronous dynamic random access memory (ESDRAM), synclink dynamic random access memory (SLDRAM), or direct rambus random access memory (DRRAM). The memory 702 described in the embodiments of the disclosure is intended to include, but is not limited to, these and any other suitable types of memories.

The memory 702 in the embodiments of the disclosure is used to store various types of data to support the operation of the device 700. Examples of these data include any computer program used to operate on the device 700, such as an application program 7022. The program for implementing the method of the embodiments of the disclosure may be included in the application program 7022.

The method disclosed in the foregoing embodiments of the disclosure may be applied in the processor 701 or may be implemented by the processor 701. The processor 701 may be an integrated circuit chip with signal processing capabilities. In the implementation process, the steps of the foregoing method may be completed by an integrated logic circuit of hardware or a command in the form of software in the processor 701. The aforementioned processor 701 may be a general-purpose processor, a digital signal processor (DSP), or other components such as a programmable logic device, a discrete gate, a transistor logic device, a discrete hardware component, and the like. The processor 701 may implement or execute the various methods, steps, and logical block diagrams disclosed in the embodiments of the disclosure. The general-purpose processor may be a microprocessor or any conventional processor or the like. The steps of the method disclosed in the embodiments of the disclosure may be directly implemented as being executed and completed by a hardware decoding processor, or may be executed and completed by a combination of hardware and software modules in a decoding processor. The software module may be located in a storage medium, and the storage medium is located in the memory 702. The processor 701 reads the information in the memory 702 and completes the steps of the foregoing method in combination with its hardware.

In an exemplary embodiment, the device 700 may be implemented by one or a plurality of application specific integrated circuits (ASICs), a DSP, programmable logic device (PLD), complex programmable logic device (CPLD), FPGA, general-purpose processor, controller, MCU, MPU, or other electronic components configured for performing the foregoing method.

The embodiments of the disclosure also provide a storage medium configured for storing a computer program.

Optionally, the storage medium may be applied to the first terminal device in the embodiments of the disclosure, and the computer program causes the computer to execute the corresponding process in each method applied in the first terminal device of the embodiments of the disclosure. For the sake of brevity, repeated description is not provided herein.

Optionally, the storage medium may be applied to the electronic device in the embodiments of the disclosure, and the computer program causes the computer to execute the corresponding process in each method applied in the electronic device of the embodiments of the disclosure. For the sake of brevity, repeated description is not provided herein.

The embodiments of the disclosure further provide a chip including a processor configured to call and run a computer program from a memory, such that a device installed with the chip executes the sidelink feedback method applied in the first terminal device.

The embodiments of the disclosure further provide a chip including a processor configured to call and run a computer program from a memory, such that a device installed with the chip executes the sidelink feedback method applied in the electronic device.

The embodiments of the disclosure further provide a computer program product including a computer program instruction, and the computer program instruction enables a computer to execute the sidelink feedback method applied in the first terminal device.

The embodiments of the disclosure further provide a computer program product including a computer program instruction, and the computer program instruction enables a computer to execute the sidelink feedback method applied in the electronic device.

The embodiments of the disclosure further provide a computer program, and the computer program enables a computer to execute the sidelink feedback method applied in the first terminal device.

The embodiments of the disclosure further provide a computer program, and the computer program enables a computer to execute the sidelink feedback method applied in the electronic device.

The disclosure is described with reference to flow charts and/or block diagrams of methods, devices (systems), and computer program products according to the embodiments of the disclosure. It should be understood that each process and/or block in each flow chart and/or block diagram, and the combination of processes and/or blocks in the flow charts and/or block diagrams may be implemented by computer program instructions. These computer program instructions may be provided to the processor of a general-purpose computer, a special-purpose computer, an embedded processor, or other programmable data processing devices to produce a machine. In this way, the commands executed by the processor of the computer or other programmable data processing devices generate a device for implementing the functions specified in one or more processes in the flow chart and/or one or more blocks in the block diagram.

These computer program instructions may also be stored in a computer-readable memory that may guide a computer or other programmable data processing devices to work in a specific manner. In this way, the commands stored in the computer-readable memory generate an article of manufacturing including the command device. The command device implements the functions specified in one or more processes in the flow chart and/or one or more blocks in the block diagram.

These computer program instructions may also be loaded onto a computer or other programmable data processing devices, so that a series of operation steps may be executed on the computer or other programmable devices to generate processing of computer implementation. As such, the commands executed on the computer or other programmable devices provide steps for implementing the functions specified in one or more processes in the flow chart and/or one or more blocks in the block diagram.

It should be understood that the terms "system" and "network" used in the disclosure may be used interchangeably most of the time in the specification. The term "and/or" in the disclosure is merely an association relationship that describes the associated objects, indicating that there may be three types of relationships. For instance, A and/or B may mean that: A exists alone, A and B exist at the same time, and B exists alone. Besides, the character "/" in the disclosure generally indicates that the associated objects before and after are in an "or" relationship.

The above description is only preferred embodiments of the disclosure and is not intended to limit the disclosure. Any modifications, equivalent replacements, and modifications made without departing from the spirit and principles of the disclosure should fall within the protection scope of the disclosure.

## Claims

1. A sidelink feedback method, comprising:
acquiring, by a first terminal device, first configuration information, wherein the first configuration information is used to determine a sidelink feedback mode, or the first configuration information is used to determine a maximum number of sidelink feedback channels that can be simultaneously transmitted by the first terminal device.

2. The method according to claim 1, wherein acquiring the first configuration information by the first terminal device further comprises:
acquiring, by the first terminal device, the first configuration information according to pre-configured information.

3. The method according to claim 2, wherein the pre-configured information comprises:
resource pool configuration information.

4. The method according to claim 2, wherein the pre-configured information comprises capability information of the first terminal device.

5. The method according to claim 1, wherein acquiring the first configuration information by the first terminal device further comprises:
receiving, by the first terminal device, the first configuration information sent by a network device.

6. The method according to claim 5, wherein the first configuration information is at least carried in any one of the following information:
a broadcast message, radio resource control (RRC) signaling, and downlink control information (DCI).

7. The method according to claim 1, wherein acquiring the first configuration information by the first terminal device further comprises:
receiving, by the first terminal device, the first configuration information sent by a second terminal device.

8. The method according to any one of claims 1 to 7, wherein the first configuration information is used to determine the sidelink feedback mode in a case where the first configuration information comprises a first information domain and the first information domain is 1 bit, or
the first configuration information is used to determine the maximum number of sidelink feedback channels that can be simultaneously transmitted by the first terminal device in a case where the first information domain is N bits, and N is a positive integer greater than 1.

9. The method according to any one of claims 1 to 8, wherein the sidelink feedback mode comprises:
transmitting, by the first terminal device, only one sidelink feedback channel simultaneously; or
transmitting, by the first terminal device, two or more than two sidelink feedback channels simultaneously.

10. The method according to any one of claims 1 to 9, wherein the method further comprises:
transmitting, by the first terminal device, the first configuration information to a third terminal device.

11. The method according to claim 7 or 10, wherein the first configuration information is at least carried in any one of the following:
a physical sidelink broadcast channel (PSBCH), a physical sidelink control channel (PSCCH), a physical sidelink shared channel (PSSCH), and sidelink RRC signaling.

12. The method according to any one of claims 1 to 11, wherein the method further comprises:
transmitting, by the first terminal device, all sidelink feedback channels to be transmitted in a case where a number of sidelink feedback channels to be transmitted is less than or equal to the maximum number of sidelink feedback channels that can be simultaneously transmitted by the first terminal device.

13. The method according to any one of claims 1 to 11, wherein the method further comprises:
determining that M is equal to the maximum number of sidelink feedback channels that can be transmitted simultaneously by the first terminal device (300, 700);
determining, by the first terminal device, among the sidelink feedback channels that need to be transmitted, M sidelink feedback channels with highest priorities as sidelink feedback channels to be transmitted according to a priority of data corresponding to the sidelink feedback channels that need to be transmitted in a case where a number of sidelink feedback channels that need to be transmitted is greater than the maximum number of sidelink feedback channels that can be simultaneously transmitted by the first terminal device.

14. The method according to any one of claims 1 to 13, wherein the method further comprises:
determining, by the first terminal device, transmission power of the sidelink feedback channels to be transmitted in a case where the number of sidelink feedback channels to be transmitted is two or more than two.

15. The method according to claim 14, wherein determining the transmission power of the sidelink feedback channels to be transmitted by the first terminal device further comprises:
equally allocating, by the first terminal device, transmission power for the sidelink feedback channels to be transmitted according to maximum transmission power of the first terminal device.

16. The method according to claim 14, wherein determining the transmission power of the sidelink feedback channels to be transmitted by the first terminal device further comprises:
determining, by the first terminal device, power of the sidelink feedback channels to be transmitted according to a priority of data corresponding to the sidelink feedback channels to be transmitted.

17. The method according to claim 16, wherein determining the power of the sidelink feedback channels to be transmitted according to the priority of data corresponding to the sidelink feedback channels to be transmitted by the first terminal device further comprises:
reducing, by the first terminal device, transmission power of sidelink feedback channels corresponding to data with low priority in a case where a sum of transmission power of the sidelink feedback channels to be transmitted is greater than maximum transmission power of the first terminal device; or
not allocating, by the first terminal device, the transmission power to the sidelink feedback channels corresponding to the data with low priority.

18. A sidelink feedback method, comprising:
transmitting, by an electronic device, first configuration information, wherein the first configuration information is used to determine a sidelink feedback mode, or the first configuration information is used to determine a maximum number of sidelink feedback channels that can be simultaneously transmitted by the first terminal device.

19. The method according to claim 18, wherein the first configuration information is at least carried in any one of the following information:
a broadcast message, radio resource control (RRC) signaling, and downlink control information (DCI).

20. The method according to claim 19, wherein the electronic device is a network device.

21. The method according to claim 18, wherein the first configuration information is at least carried in any one of the following:
a physical sidelink broadcast channel (PSBCH), a physical sidelink control channel (PSCCH), a physical sidelink shared channel (PSSCH), and sidelink RRC signaling.

22. The method according to claim 21, wherein the electronic device is a fourth terminal device.

23. The method according to any one of claims 18 to 22, wherein the first configuration information is used to determine the sidelink feedback mode in a case where the first configuration information comprises a first information domain and the first information domain is 1 bit, or
the first configuration information is used to determine the maximum number of sidelink feedback channels that can be simultaneously transmitted by the first terminal device in a case where the first information domain is N bits, and N is a positive integer greater than 1.

24. The method according to any one of claims 18 to 23, wherein the sidelink feedback mode comprises:
transmitting, by the first terminal device, only one sidelink feedback channel simultaneously; or
transmitting, by the first terminal device, two or more than two sidelink feedback channels simultaneously.

25. A first terminal device, comprising:
a processing unit, configured to acquire first configuration information, wherein the first configuration information is used to determine a sidelink feedback mode, or the first configuration information is used to determine a maximum number of sidelink feedback channels that can be simultaneously transmitted by the first terminal device.

26. The first terminal device according to claim 25, wherein the processing unit is configured to acquire the first configuration information according to pre-configured information.

27. The first terminal device according to claim 26, wherein the pre-configured information comprises: resource pool configuration information.

28. The first terminal device according to claim 26, wherein the pre-configured information comprises capability information of the first terminal device.

29. The first terminal device according to claim 25, wherein the processing unit is configured to receive the first configuration information sent by a network device.

30. The first terminal device according to claim 29, wherein the first configuration information is at least carried in any one of the following information:
a broadcast message, radio resource control (RRC) signaling, and downlink control information (DCI).

31. The first terminal device according to claim 25, wherein the processing unit is configured to receive the first configuration information sent by a second terminal device.

32. The first terminal device according to any one of claims 25 to 31, wherein the first configuration information is used to determine the sidelink feedback mode in a case where the first configuration information comprises a first information domain and the first information domain is 1 bit, or
the first configuration information is used to determine the maximum number of sidelink feedback channels that can be simultaneously transmitted by the first terminal device in a case where the first information domain is N bits, and N is a positive integer greater than 1.

33. The first terminal device according to any one of claims 25 to 32, wherein the sidelink feedback mode comprises:
transmitting, by the first terminal device, only one sidelink feedback channel simultaneously; or
transmitting, by the first terminal device, two or more than two sidelink feedback channels simultaneously.

34. The first terminal device according to any one of claims 25 to 33, wherein the first terminal device further comprises:
a first transmission unit, configured to transmit the first configuration information to a third terminal device.

35. The first terminal device according to claim 31 or 34, wherein the first configuration information is at least carried in any one of the following:
a physical sidelink broadcast channel (PSBCH), a physical sidelink control channel (PSCCH), a physical sidelink shared channel (PSSCH), and sidelink RRC signaling.

36. The first terminal device according to any one of claims 25 to 35, wherein the first terminal device further comprises:
a second transmission unit, configured to transmit all sidelink feedback channels to be transmitted in a case where a number of sidelink feedback channels to be transmitted is less than or equal to the maximum number of sidelink feedback channels that can be simultaneously transmitted by the first terminal device.

37. The first terminal device according to any one of claims 25 to 35, wherein the processing unit is further configured to determine M is equal to the maximum number of sidelink feedback channels that can be transmitted simultaneously by the first terminal device, and determine, among the sidelink feedback channels that need to be transmitted, M sidelink feedback channels with highest priorities as sidelink feedback channels to be transmitted according to a priority of data corresponding to the sidelink feedback channels that need to be transmitted in a case where a number of sidelink feedback channels that need to be transmitted is greater than the maximum number of sidelink feedback channels that can be simultaneously transmitted by the first terminal device.

38. The first terminal device according to any one of claims 25 to 37, wherein the processing unit is further configured to determine, by the first terminal device, transmission power of the sidelink feedback channels to be transmitted in a case where the number of sidelink feedback channels to be transmitted is two or more than two.

39. The first terminal device according to claim 38, wherein the processing unit is further configured to equally allocate transmission power for the sidelink feedback channels to be transmitted according to maximum transmission power of the first terminal device.

40. The first terminal device according to claim 38, wherein the processing unit is further configured to determine power of the sidelink feedback channels to be transmitted according to a priority of data corresponding to the sidelink feedback channels to be transmitted.

41. The first terminal device according to claim 40, wherein the processing unit is further configured to reduce transmission power of sidelink feedback channels corresponding to data with low priority in a case where a sum of transmission power of the sidelink feedback channels to be transmitted is greater than maximum transmission power of the first terminal device, or
the processing unit is further configured not to allocate the transmission power to the sidelink feedback channels corresponding to the data with low priority.

42. An electronic device, comprising:
a sending unit, configured to send first configuration information to a first terminal device, wherein the first configuration information is used to determine a sidelink feedback mode, or the first configuration information is used to determine a maximum number of sidelink feedback channels that can be simultaneously transmitted by the first terminal device.

43. The electronic device according to claim 42, wherein the first configuration information is at least carried in any one of the following information:
a broadcast message, radio resource control (RRC) signaling, and downlink control information (DCI).

44. The electronic device according to claim 43, wherein the electronic device is a network device.

45. The electronic device according to claim 42, wherein the first configuration information is at least carried in any one of the following channels:
a physical sidelink broadcast channel (PSBCH), a physical sidelink control channel (PSCCH), a physical sidelink shared channel (PSSCH), and sidelink RRC signaling.

46. The electronic device according to claim 45, wherein the electronic device is a fourth terminal device.

47. The electronic device according to any one of claims 42 to 46, wherein the first configuration information is used to determine the sidelink feedback mode in a case where the first configuration information comprises a first information domain and the first information domain is 1 bit, or
the first configuration information is used to determine the maximum number of sidelink feedback channels that can be simultaneously transmitted by the first terminal device in a case where the first information domain is N bits, and N is a positive integer greater than 1.

48. The electronic device according to any one of claims 42 to 47, wherein the sidelink feedback mode comprises:
transmitting, by the first terminal device, only one sidelink feedback channel simultaneously; or
transmitting, by the first terminal device, two or more than two sidelink feedback channels simultaneously.

49. A first terminal device, comprising a processor and a memory configured for storing a computer program that can run on the processor, wherein
the processor is configured to perform the steps of the sidelink feedback method according to any one of claims 1 to 17 when running the computer program.

50. An electronic device, comprising a processor and a memory configured for storing a computer program that can run on the processor, wherein
the processor is configured to perform the steps of the sidelink feedback method according to any one of claims 18 to 24 when running the computer program.

51. A chip, comprising a processor configured to call and run a computer program from a memory, such that a device installed with the chip executes the sidelink feedback method according to any one of claims 1 to 17.

52. A chip, comprising a processor configured to call and run a computer program from a memory, such that a device installed with the chip executes the sidelink feedback method according to any one of claims 18 to 24.

53. A storage medium, storing an executable program, wherein the executable program executes the sidelink feedback method according to any one of claims 1 to 17 when being executed by a processor.

54. A storage medium, storing an executable program, wherein the executable program executes the sidelink feedback method according to any one of claims 18 to 24 when being executed by a processor.

55. A computer program product, comprising a computer program instruction, wherein the computer program instruction enables a computer to execute the sidelink feedback method according to any one of claims 1 to 17.

56. A computer program product, comprising a computer program instruction, wherein the computer program instruction enables a computer to execute the sidelink feedback method according to any one of claims 18 to 24.

57. A computer program, wherein the computer program enables a computer to execute the sidelink feedback method according to any one of claims 1 to 17.

58. A computer program, wherein the computer program enables a computer to execute the sidelink feedback method according to any one of claims 18 to 24.
